# EUROPEAN PATENT APPLICATION

(11) **EP 4 113 649 A1**
(43) Date of publication of application: **04.01.2023**
(21) Application number: 20922385.8
(22) Date of filing: 10.12.2020
(51) Int. Cl.: H01M 4/13, H01M 4/36, H01M 10/0525, H01M 10/0562, H01M 10/0585

(54) **SOLID-STATE BATTERY MANUFACTURING METHOD AND SOLID-STATE BATTERY**

(30) Priority: 26.02.2020 JP 2020030269
(71) Applicant: FDK Corporation, Tokyo 108-8212 (JP)
(72) Inventor: KOBAYASHI, Masakazu, Tokyo 108-8212 (JP); MITANI, Akihiro, Tokyo 108-8212 (JP); HIGUCHI, Satoshi, Tokyo 108-8212 (JP); SUZUKI, Minako, Tokyo 108-8212 (JP); GOTO, Yuji, Tokyo 108-8212 (JP)
(74) Representative: Haseltine Lake Kempner LLP
(86) International application number: PCT/JP2020/046115
(87) International publication number: WO 2021/171736

(57) **Abstract**

To produce a solid-state battery in which a short circuit is unlikely to occur.

A method of manufacturing a solid-state battery includes a step of forming an electrode (1) that includes an electrode layer (10) and an electrode layer (20) facing the electrode layer (10) and that further includes a buried layer (11) interposed between the electrode layer (10) and the electrode layer (20) so as to surround a contact portion (3) where these electrode layers (10) and (20) contact each other. For the buried layer (11), a solid electrolyte with lower electron conductivity than an electrode active material is used, for example. The buried layer (11) is provided between the edge portion (10a) of the electrode layer (10) and the edge portion (20a) of the electrode layer (20), so that deformation of the electrode layer (10) and electrode layer (20) is prevented in the subsequent lamination and thermocompression bonding and thus the occurrence of a short circuit due to such deformation is prevented in the solid-state battery.

## Description

### Technical Field

The embodiment discussed herein relates to a method of manufacturing a solid-state battery and a solid-state battery.

### Background Art

Solid-state batteries have been known, which have a structure where an electrolyte layer is provided between a pair of electrodes, a positive electrode and a negative electrode.

With regard to such solid-state batteries, for example, PTL1 teaches a technique of pressurizing electrodes and an electrolyte layer with the end portions of the electrodes or electrolyte layer or the end portions of the electrodes and electrolyte layer covered with an insulating material, so as to prevent deformation and dropping of the end portions and to prevent a contact or short circuit between the end portions of the electrodes sandwiching the electrolyte layer. In addition, PTL2 teaches a technique in which the thickness of an electrode continuously increases from an end to the center thereof so as to prevent fracture and film breakage of a laminated cell during isostatic pressing.

### Citation List

### Patent Literature

PTL1: Japanese Laid-open Patent Publication No. 2012-38425
PTL2: Japanese Laid-open Patent Publication No. 2014-116136

### Summary of Invention

### Technical Problem

In a solid-state battery having a laminate of an electrolyte layer and an electrode pair sandwiching the electrolyte layer, a contact or short circuit between the electrode pair may occur due to misalignment of the electrode pair sandwiching the electrolyte layer, deformation or defective bonding in thermocompression bonding, or deformation in a firing process during the solid-state battery manufacturing.

According to one aspect, the present disclosure intends to provide a solid-state battery in which a short circuit is unlikely to occur.

### Solution to Problem

According to one aspect, there is provided a method of manufacturing a solid-state battery, including a step of forming a first electrode including a first electrode layer and a second electrode layer facing the first electrode layer, the first electrode further including a first buried layer interposed between the first electrode layer and the second electrode layer so as to surround a first portion where the first electrode layer and the second electrode layer contact each other.

Further, according to one aspect, there is provided a solid-state battery including a first electrode including a first region and a second region surrounding the first region, and a first buried layer provided in the second region except for part of a side end face of the first electrode.

### Advantageous Effects of Invention

According to one aspect, it is achieved to provide a solid-state battery in which a short circuit is unlikely to occur.

The objects, features, and advantages of the present disclosure will become apparent from the following description of preferred embodiments, when read together with the accompany drawings.

### Brief Description of Drawings

[FIG. 1] FIG. 1 includes views for describing one process of a method of manufacturing a solid-state battery.
[FIG. 2] FIG. 2 includes views for describing an example of an electrode of the solid-state battery.
[FIG. 3] FIG. 3 includes views for describing other examples of the electrode of the solid-state battery.
[FIG. 4] FIG. 4 includes views for describing an example of a method of forming a positive electrode part.
[FIG. 5] FIG. 5 includes views for describing an example of a method of forming a negative electrode part.
[FIG. 6] FIG. 6 includes first views for describing an example of the structure of the solid-state battery.
[FIG. 7] FIG. 7 includes second views for describing the example of the structure of the solid-state battery.
[FIG. 8] FIG. 8 includes views of cross sections in a terminal face perpendicular direction, illustrating an example of steps of forming a positive electrode part.
[FIG. 9] FIG. 9 includes views of cross sections in the terminal face perpendicular direction, illustrating an example of steps of forming a negative electrode part.
[FIG. 10] FIG. 10 includes views of cross sections in the terminal face perpendicular direction, illustrating an example of steps of forming a laminate green.
[FIG. 11] FIG. 11 includes views of cross sections in the terminal face perpendicular direction, illustrating an example of a cutting step and a heat treatment step.
[FIG. 12] FIG. 12 includes views of cross sections in a terminal face parallel direction, illustrating the example of the steps of forming the positive electrode part.
[FIG. 13] FIG. 13 includes views of cross sections in the terminal face parallel direction, illustrating the example of the steps of forming the negative electrode part.
[FIG. 14] FIG. 14 includes views of cross sections in the terminal face parallel direction, illustrating the example of the steps of forming the laminate green.
[FIG. 15] FIG. 15 includes views of cross sections in the terminal face parallel direction, illustrating the example of the cutting step and heat treatment step.
[FIG. 16] FIG. 16 includes views for describing an electrode structure of a solid-state battery.
[FIG. 17] FIG. 17 illustrates an example of observation results of cross sections of solid-state batteries.

### Description of Embodiments

With recent rapid development of information-related devices such as personal computers, mobile telephones, and electric vehicles, communication devices, and transportation-related devices, development of batteries as their power supplies is emphasized. Among various types of batteries, secondary batteries including lithium ion batteries and solid-state batteries get attention because they have a high level of safety and a high energy density and are rechargeable.

In general, lithium ion batteries have a positive electrode containing a positive electrode active material, a negative electrode containing a negative electrode active material, and an electrolyte layer provided between the positive and negative electrodes. In lithium ion batteries that use a flammable organic electrolyte solution as an electrolyte layer provided between a positive electrode and a negative electrode, safety measures are indispensable to prevent liquid leakage, short circuit, overcharge, and others. For high-capacity and high-energy-density lithium ion batteries, further improvement in safety is demanded. For this reason, research and development have been conducted on solid-state batteries using oxide and sulfide solid electrolytes as electrolytes.

A doctor blade method and a screen printing method are performed as steps of a method of manufacturing a solid-state battery.

In the doctor blade method, a greensheet is formed by preparing a slurry by mixing a binder such as polyvinyl alcohol (PVA), polyvinyl butyral (PVB), polyvinylidene difluoride (PVDF), acrylic resin, or ethyl methyl cellulose, a solvent, and others with pre-fired ceramic powders such as inorganic oxide, and forming the slurry into a thin sheet with application or printing. A positive electrode sheet, a negative electrode sheet, and a solid electrolyte sheet are formed in this manner, and are laminated and sintered.

In the screen printing method, a paste is prepared by mixing a binder such as PVA, PVB, PVDF, acrylic resin, or ethyl methyl cellulose, a solvent, and others with pre-fired ceramic powders such as inorganic oxide. A screen mask is placed on a print target, and the paste is applied on the screen mask. Using a squeegee, the paste is spread from the edge of the screen mask and is pressed against the print target, so that the paste fills the non-covered portions of the print target, which are not covered with the screen mask. As a result, the paste is transferred onto the print target.

For example, a solid-state battery is manufactured by laminating a positive electrode, a negative electrode, and an electrolyte layer using a solid electrolyte, or laminating these and additionally a current collector layer, and then performing thermocompression bonding and co-firing. In the case where the solid-state battery uses conduction of lithium ions, the lithium ions move from the positive electrode to the negative electrode through the electrolyte layer during charging, whereas the lithium ions move from the negative electrode to the positive electrode through the electrolyte layer during discharging. The charging and discharging of the solid-state battery are carried out by such conduction of the lithium ions. Parameters relating to the positive electrode and negative electrode, which affect the performance of the solid-state battery to be manufactured, include lithium ion conductivity and electron conductivity, and a parameter relating to the electrolyte layer is lithium ion conductivity.

By the way, during the manufacturing of the solid-state battery having a laminate of the electrolyte layer and the positive and negative electrodes sandwiching the electrolyte layer, defects may occur, such as a misalignment between the layers of the laminate or between the internal components of each layer, a deformation and defective bonding in the thermocompression bonding, and a deformation in the firing process. If such a defect occurs, the positive electrode and the negative electrode may contact each other, meaning that a short circuit occurs in the solid-state battery. Such a short circuit reduces the performance and quality of the solid-state battery.

To deal with this, the following technique is used to provide a high-performance and high-quality solid-state battery in which an internal short circuit is unlikely to occur.

### (Manufacturing of Solid-State Battery)

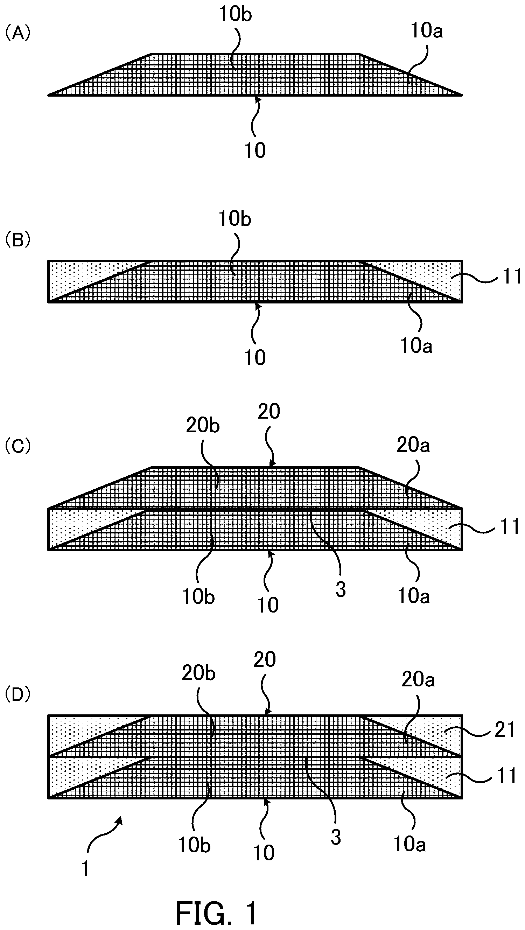

FIG. 1 includes views for describing one process of a method of manufacturing a solid-state battery. Parts (A) to (D) of FIG. 1 are schematic sectional views illustrating a main part of steps of forming an electrode in solid-state battery manufacturing.

First, as illustrated in part (A) of FIG. 1, an electrode layer 10 of a first layer is formed. For example, this electrode layer 10 of the first layer is thicker at the inner portion 10b than at the edge portion 10a in sectional view.

For example, the electrode layer 10 of the first layer is formed by printing a paste prepared for the electrode layer 10 onto a predetermined print target such as an electrolyte layer (not illustrated) with a screen printing method and drying it. For example, the paste for the electrode layer 10 of the first layer contains an active material, a solid electrolyte, a conductive assistant, a binder, a solvent, and others.

After the electrode layer 10 of the first layer is formed, a buried layer 11 of the first layer is formed on the edge portion 10a of the electrode layer 10 of the first layer, as illustrated in part (B) of FIG. 1. For example, in sectional view, the buried layer 11 of the first layer is formed to fill the edge portion 10a of the electrode layer 10 of the first layer, which is thinner than the inner portion 10b thereof.

For the buried layer 11 of the first layer, a material with lower electron conductivity than the active material contained in the electrode layer 10 of the first layer (and an electrode layer 20 of a second layer to be described later), for example, an insulating material or a solid electrolyte is used. As an example, a material with an electron conductivity of 1×10⁻² S/cm to 1×10⁻⁵ S/cm is used for the electrode layer 10 of the first layer, and a material with an electron conductivity of 1×10⁻⁹ S/cm to 1×10⁻¹⁰ S/cm is used for the buried layer 11 of the first layer.

For example, the buried layer 11 of the first layer is formed by printing a paste prepared for the buried layer 11 onto an area of the electrode layer 10 of the first layer except for the inner portion 10b (i.e., onto the edge portion 10a or onto the edge portion 10a and an area outside the edge portion 10a) with the screen printing method and drying it. The paste for the buried layer 11 of the first layer contains a solid electrolyte, a binder, a plasticizer, a dispersant, a diluent, and others, for example.

After the buried layer 11 of the first layer is formed, an electrode layer 20 of a second layer is formed, as illustrated in part (C) of FIG. 1. For example, the electrode layer 20 of the second layer is thicker at the inner portion 20b than at the edge portion 20a in sectional view.

For example, the electrode layer 20 of the second layer is formed by printing a paste prepared for the electrode layer 20 onto the inner portion 10b of the electrode layer 10 of the first layer and the buried layer 11 of the first layer formed on the edge portion 10a of the electrode layer 10 with the screen printing method and drying it. For example, the paste for the electrode layer 20 of the second layer contains an active material, a solid electrolyte, a conductive assistant, a binder, a solvent, and others.

The electrode layer 10 of the first layer and the electrode layer 20 of the second layer are both electrode layers to serve as part of the positive electrode of the solid-state battery or are both electrode layers to serve as part of the negative electrode of the solid-state battery. That is, the electrode layer 10 of the first layer and the electrode layer 20 of the second layer both contain a positive electrode active material or a negative electrode active material. The electrode layer 10 of the first layer and the electrode layer 20 of the second layer are provided such that their inner portions 10b and 20b contact each other. The buried layer 11 of the first layer is provided to surround a contact portion 3 where the electrode layer 10 of the first layer and the electrode layer 20 of the second layer contact each other.

After the electrode layer 20 of the second layer is formed, a buried layer 21 of the second layer is formed on the edge portion 20a of the electrode layer 20 of the second layer, as illustrated in part (D) of FIG. 1. For example, in sectional view, the buried layer 21 of the second layer is formed to fill the edge portion 20a of the electrode layer 20 of the second layer, which is thinner than the inner portion 20b thereof.

For the buried layer 21 of the second layer, a material with lower electron conductivity than the active material contained in the electrode layer 20 of the second layer (and an electrode layer of a third layer to be described later), for example, an insulating material or a solid electrolyte is used. As an example, a material with an electron conductivity of 1×10⁻² S/cm to 1×10⁻⁵ S/cm is used for the electrode layer 20 of the second layer, and a material with an electron conductivity of 1×10⁻⁹ S/cm to 1×10⁻¹⁰ S/cm is used for the buried layer 21 of the second layer.

For example, the buried layer 21 of the second layer is formed by printing a paste prepared for the buried layer 21 onto an area of the electrode layer 20 of the second layer except for the inner portion 20b (i.e., onto the edge portion 20a or onto the edge portion 20a and an area outside the edge portion 20a) with the screen printing method and drying it. The paste for the buried layer 21 of the second layer contains a solid electrolyte, a binder, a plasticizer, a dispersant, a diluent, and others, for example.

The above-described steps are repeated to form as many layers as needed to serve as the positive electrode or negative electrode (hereinafter, either one or both of them are referred to as "electrode," simply) of the solid-state battery, for example, to form as many layers as needed to obtain an active material volume and a film thickness needed for the electrode of the solid-state battery to be manufactured. For example, in the case where an electrode layer of a third layer (not illustrated) is formed on the electrode layer 20 of the second layer such as to contact the inner portion 20b of the electrode layer 20, the buried layer 21 of the second layer is provided to surround their contact portion.

Through the steps illustrated in parts (A) to (D) of FIG. 1, an electrode 1 (the electrode layers 10 and 20 of two layers are illustrated as an example in part (D) of FIG. 1) of the solid-state battery is formed.

In the solid-state battery manufacturing, a positive electrode and negative electrode each formed by the above-described steps are laminated with an electrolyte layer (for example, a base under the electrode layer 10 of the first layer) interposed therebetween, and are subjected to the thermocompression bonding.

In the above-described steps, the buried layer 11 of the first layer is provided on the edge portion 10a of the electrode layer 10 of the first layer, and the electrode layer 20 of the second layer is provided thereon. By doing so, the gap between the edge portion 10a of the electrode layer 10 of the first layer and the edge portion 20a of the electrode layer 20 of the second layer is filled with the buried layer 11 of the first layer, and the edge portion 20a of the electrode layer 20 of the second layer is supported by the buried layer 11 of the first layer. In the case where an electrode layer of a third layer is formed, the gap between the edge portion 20a of the electrode layer 20 of the second layer and the edge portion of the electrode layer of the third layer is filled with the buried layer 21 of the second layer provided on the edge portion 20a of the electrode layer 20 of the second layer, and the edge portion of the electrode layer of the third layer is supported by the buried layer 21 of the second layer.

As described above, in a laminate of the electrode layer group included in each of the positive electrode and negative electrode, the edge portion of an upper-side electrode layer is supported by a buried layer provided on the edge portion of the lower-side electrode layer. Therefore, deformation of the electrode layer groups in these electrodes is prevented in the lamination and thermocompression bonding that are performed after the electrodes are formed. Since the deformation of the electrodes and their electrode layer groups is prevented in the thermocompression bonding, a contact between the electrodes laminated with an electrolyte layer therebetween, i.e., between the positive electrode and the negative electrode is prevented. It is thus achieved to efficiently reduce the occurrence of an internal short circuit in the solid-state battery.

In addition, an electrode having a laminate of an electrode layer group as described above may be said to have a structure where the edge portion of a lower-side electrode layer and the edge portion of the upper-side electrode layer have a recess (corresponding to the above-described gap) therebetween and a buried layer with lower electron conductivity than the lower-side and upper-side electrode layers is provided in the recess. In a solid-state battery with an electrode having this structure as a positive electrode or a negative electrode, a current hardly flows to the side end portion of the electrode (the edge portion of each electrode layer of the laminate), where a variation in electrical conductivity is likely to occur. Thus, a variation in performance among solid-state batteries manufactured is reduced.

With the above-described steps, it is possible to produce high-performance and high-quality solid-state batteries in which a short circuit is unlikely to occur.

The following further describes the electrodes of the solid-state battery that are formed with the above-described steps.

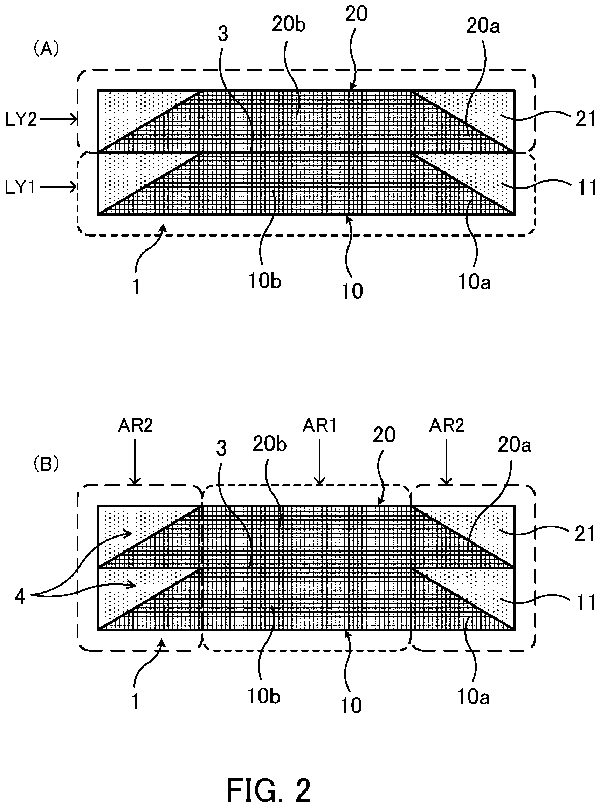

FIG. 2 includes views for describing an example of an electrode of the solid-state battery. Parts (A) and (B) of FIG. 2 are schematic sectional views illustrating a main part of the example of an electrode of the solid-state battery.

The electrode 1 (each of the positive electrode and the negative electrode) of the solid-state battery manufactured with the steps illustrated in parts (A) to (D) of FIG. 1 includes a first layer LY1 and a second layer LY2 as illustrated in part (A) of FIG. 2. The first layer LY1 includes the electrode layer 10 of the first layer and the buried layer 11 of the first layer provided on the edge portion 10a of the electrode layer 10. The second layer LY2 includes the electrode layer 20 of the second layer and the buried layer 21 of the second layer provided on the edge portion 20a of the electrode layer 20.

In addition, for example, the electrode 1 (each of the positive electrode and the negative electrode) of the solid-state battery manufactured with the steps illustrated in parts (A) to (D) of FIG. 1 includes a first region AR1 and a second region AR2 as illustrated in part (B) of FIG. 2. The first area AR1 includes the inner portion 10b of the electrode layer 10 of the first layer and the inner portion 20b of the electrode layer 20 of the second layer. The contact portion 3 where the electrode layer 10 of the first layer and the electrode layer 20 of the second layer contact each other is present in the first region AR1. The second region AR2 surrounds the first region AR1. The second region AR2 includes the edge portion 10a of the electrode layer 10 of the first layer and the buried layer 11 of the first layer provided thereon, and the edge portion 20a of the electrode layer 20 of the second layer and the buried layer 21 of the second layer provided thereon.

In the battery 1, the edge portion 10a of the electrode layer 10 of the first layer and the edge portion 20a of the electrode layer 20 of the second layer in the second region AR2 have a recess 4 therebetween, which is recessed toward the first region AR1, and the buried layer 11 of the first layer is formed in the recess 4. This is the same with the second and subsequent layers. For example, the edge portion 20a of the electrode layer 20 of the second layer and the edge portion of an electrode layer of a third layer have a recess 4 therebetween, and the buried layer 21 of the second layer is formed in the recess 4.

In the second region AR2 including the buried layer 11 and buried layer 21 in the electrode 1 of the above solid-state battery, deformation of the electrode layer 10 and electrode layer 20 is prevented in the lamination and thermocompression bonding, and the occurrence of a short circuit due to the deformation is prevented in the solid-state battery accordingly. In addition, in the electrode 1, a current hardly flows to the second region AR2 where a variation in electrical conductivity is likely to occur compared with the first region AR1. Thus, a variation in performance among solid-state batteries each having the electrode 1 is reduced.

In this connection, parts (A) and (B) of FIG. 2 illustrate the boundary between the inner portion 10b of the electrode layer 10 of the first layer and the inner portion 20b of the electrode layer 20 of the second layer. Note that a firing process may be performed in the solid-state battery manufacturing. Through the firing process, the inner portion 10b of the electrode layer 10 of the first layer and the inner portion 20b of the electrode layer 20 of the second layer may be integrated at their contact portion 3 by sintering.

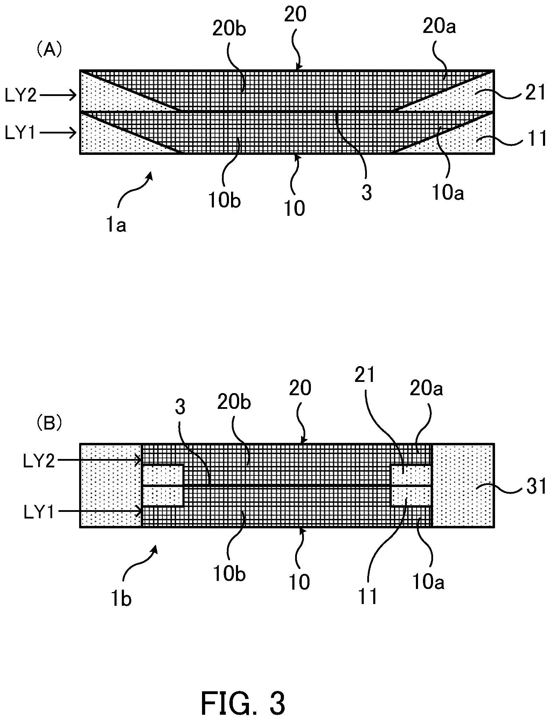

In addition, in the above-described example illustrated in parts (A) to (D) of FIG. 1, the electrode 1 is formed by forming the electrode layer 10 of the first layer, the buried layer 11 of the first layer, the electrode layer 20 of the second layer, and the buried layer 21 of the second layer in this order. The order of forming the layers is not limited thereto. This will be described below with reference to FIG. 3.

FIG. 3 includes views for describing other examples of the electrode of the solid-state battery. Parts (A) and (B) of FIG. 3 are schematic sectional views illustrating main parts of the examples of the electrode.

For example, in forming an electrode 1a as illustrated in part (A) of FIG. 3, the buried layer 11 of the first layer is first formed with the screen printing method, for example, and the electrode layer 10 of the first layer is then formed with the screen printing method, for example, thereby forming the first layer LY1. Then, the buried layer 21 of the second layer is formed with the screen printing method, for example, and the electrode layer 20 of the second layer is then formed with the screen printing method, for example, thereby forming the second layer LY2. The layers may be formed in the above order to obtain the electrode 1a as illustrated in part (A) of FIG. 3.

Alternatively, in forming an electrode 1b as illustrated in part (B) of FIG. 3, the electrode layer 10 of the first layer is first formed, and the buried layer 11 of the first layer is then formed, thereby forming the first layer LY1. Then, the buried layer 21 of the second layer is formed, and the electrode layer 20 of the second layer is then formed, thereby forming the second layer LY2. After that, a buried layer 31 is further formed on the outside of the first layer LY1 and the second layer LY2. These layers are formed with the screen printing method, for example. The layers may be formed in the above order to obtain the electrode 1b as illustrated in part (B) of FIG. 3.

### (Example)

An example of the solid-state battery and solid-state battery manufacturing method will be described in detail below.

The following first describes an example of how to form an electrolyte sheet, a positive electrode layer paste, a negative electrode layer paste, and a buried layer paste individually.

### (Formation of Electrolyte Sheet)

To form the electrolyte sheet, a paste containing a solid electrolyte, a binder, a plasticizer, a dispersant, and a diluent is used.

As the solid electrolyte for the electrolyte sheet paste, Li_{1.5}AL_{0.5}Ge_{1.5}(PO₄)₃ (hereinafter, referred to as "LAGP"), which is one kind of NASICON-type oxide-based solid electrolytes, is used, for example. LAGP may also be called aluminum substituted germanium lithium phosphate or another.

As an example, the electrolyte sheet paste contains 29.0 wt% (weight percent) amorphous LAGP (hereinafter, referred to as "LAGPg") and 3.2 wt% crystalline LAGP (hereinafter, referred to as LAGPc) as the solid electrolytes, 6.5 wt% PVB as the binder, 2.2 wt% plasticizer, 0.3 wt% first dispersant, 16.1 wt% second dispersant, and 43.4 wt% ethanol as the diluent. In this connection, one kind or two or more kinds of materials may be used for each of the binder, plasticizer, dispersant, and diluent in the electrolyte sheet paste.

The above component materials of the electrolyte sheet paste are mixed and dispersed, for example, for 48 hours using a ball mill, thereby forming the electrolyte sheet paste. The formed electrolyte sheet paste is applied and dried, and more specifically for example, is applied using a sheet forming machine such as a doctor blade and is dried for ten minutes at temperature of 100°C, so that the electrolyte sheet is formed.

### (Formation of Positive Electrode Layer Paste)

As the positive electrode layer paste, a paste containing a positive electrode active material, a solid electrolyte, a conductive assistant, a binder, a plasticizer, a dispersant, and a diluent is used.

For the positive electrode active material of the positive electrode layer paste, lithium cobalt pyrophosphate (Li₂CoP₂O₇, hereinafter, referred to as "LCPO") is used, for example. For the positive electrode active material, lithium cobalt phosphate (LiCoPO₄), lithium vanadium phosphate (Li₃V₂(PO₄)₃) (hereinafter, referred to as "LVP"), or the like may be used. One kind or two or more kinds of materials may be used for the positive electrode active material. For the solid electrolyte of the positive electrode layer paste, LAGP is used, for example. For the conductive assistant of the positive electrode layer paste, a carbon material such as carbon nanofiber, carbon black, graphite, graphene, or carbon nanotubes is used, for example.

As an example, the positive electrode layer paste contains 11.8 wt% LCPO as the positive electrode active material, 17.7 wt% LAGPg as the solid electrolyte, 2.7 wt% carbon nanofiber as the conductive assistant, 7.9 wt% PVB as the binder, 0.3 wt% plasticizer, 0.6 wt% first dispersant, and 59.1 wt% tarpineol as the diluent. In this connection, one kind or two or more kinds of materials may be used for each of the binder, plasticizer, dispersant, and diluent of the positive electrode layer paste.

The above component materials of the positive electrode layer paste are mixed and dispersed, for example, for 72 hours using a ball mill, are mixed and dispersed using a triple roll mill, and are mixed and dispersed using a grind gauge until the aggregates become 1 µm or less, thereby forming the positive electrode layer paste.

### (Formation of Negative Electrode Layer Paste)

As the negative electrode layer paste, a paste containing a negative electrode active material, a solid electrolyte, a conductive assistant, a binder, a plasticizer, a dispersant, and a diluent is used.

For the negative electrode active material of the negative electrode layer paste, anatase-type titanium oxide (TiO₂) is used, for example. For the negative electrode active material, Li_{1.3}Al_{0.3}Ti_{1.7}(PO₄)₃ (hereinafter, referred to as "LATP"), which is one kind of NASICON-type oxide-based solid electrolytes, LVP, or the like may be used. One kind or two or more kinds of materials may be used for the negative electrode active material. For the solid electrolyte of the negative electrode layer paste, LAGP is used, for example. For the conductive assistant of the negative electrode layer paste, a carbon material such as carbon nanofiber, carbon black, graphite, graphene, or carbon nanotubes is used, for example.

As an example, the negative electrode layer paste contains 11.8 wt% TiO₂ as the negative electrode active material, 17.7 wt% LAGPg as the solid electrolyte, 2.7 wt% carbon nanofiber as the conductive assistant, 7.9 wt% PVB as the binder, 0.3 wt% plasticizer, 0.6 wt% first dispersant, and 59.1 wt% tarpineol as the diluent. In this connection, one kind or two or more kinds of materials may be used for each of the binder, plasticizer, dispersant, and diluent of the negative electrode layer paste.

The above component materials of the negative electrode layer paste are mixed and dispersed, for example, for 72 hours using a ball mill, are mixed and dispersed using a triple roll mill, and are mixed and dispersed using a grind gauge until the aggregates become 1 µm or less, thereby forming the negative electrode layer paste.

### (Formation of Buried Layer Paste)

As the buried layer paste, a paste containing a solid electrolyte, a binder, a plasticizer, a dispersant, and a diluent is used.

For the solid electrolyte of the buried layer paste, LAGP is used, for example. As an example, the buried layer paste contains 25.4 wt% LAGPg and 2.8 wt% LAGPc as the solid electrolytes, 8.5 wt% PVB as the binder, 0.2 wt% plasticizer, 1.9 wt% first dispersant, and 61.2 wt% tarpineol as the diluent. In this connection, one kind or two or more kinds of materials may be used for each of the binder, plasticizer, dispersant, and diluent of the buried layer paste.

The above component materials of the buried layer paste are mixed and dispersed, for example, for 72 hours using a ball mill, are mixed and dispersed using a triple roll mill, and are mixed and dispersed using a grind gauge until the aggregates become 1 µm or less, thereby forming the buried layer paste.

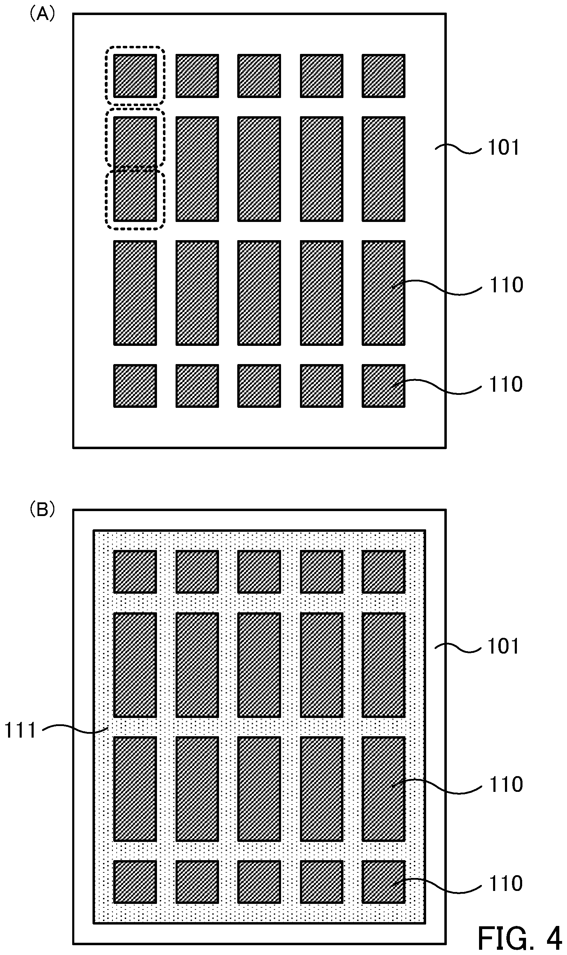

The following describes an example of manufacturing a solid-state battery using the electrolyte sheet, positive electrode layer paste, negative electrode layer paste, and buried layer paste prepared as described above with reference to FIGS. 4 to 15.

### (Manufacturing of Solid-State Battery)

FIG. 4 includes views for describing an example of a method of forming a positive electrode part. Part (A) of FIG. 4 is a schematic plan view illustrating a main part of an example of a positive electrode layer forming step. Part (B) of FIG. 4 is a schematic plan view illustrating a main part of an example of a buried layer forming step.

As illustrated in part (A) of FIG. 4, the positive electrode layer paste is applied on an electrolyte sheet 101 and is dried, so that positive electrode layers 110 of the first layer are formed. The positive electrode layer paste is applied with the screen printing method, for example. The applied positive electrode layer paste is dried under the following conditions: at temperature of 90°C for five minutes, for example.

In this connection, the positive electrode layers 110 (positive electrode layer paste) are respectively formed in areas for forming a plurality of solid-state batteries on the single electrolyte sheet 101. Part (A) of FIG. 4 illustrates the positive electrode layers 110 of two sizes, large and small, as an example. The positive electrode layers 110 of the small size are each used as a positive electrode layer of one solid-state battery, and the positive electrode layers 110 of the large size are each used as positive electrode layers of two solid-state batteries. Part (A) of FIG. 4 illustrates areas (three areas, just for convenience) each used as a positive electrode layer of one solid-state battery, in dotted boxes.

After the positive electrode layers 110 of the first layer are formed, the buried layer paste is applied around the positive electrode layers 110 on the electrolyte sheet 101 and is dried, thereby forming a buried layer 111 of the first layer in the positive electrode part, as illustrated in part (B) of FIG. 4. The buried layer 111 (buried layer paste) is formed to cover the edge portions of the positive electrode layers 110 (overlie the edge portions). The buried layer paste is applied with the screen printing method, for example. The applied buried layer paste is dried under the following conditions: at temperature of 90°C for 5 minutes, for example.

The steps illustrated in parts (A) and (B) of FIG. 4 are repeated to form a predetermined number of layers, for example, to form as many layers as needed to obtain an active material volume and a film thickness needed to function as the positive electrode of the solid-state battery, thereby forming the positive electrode part.

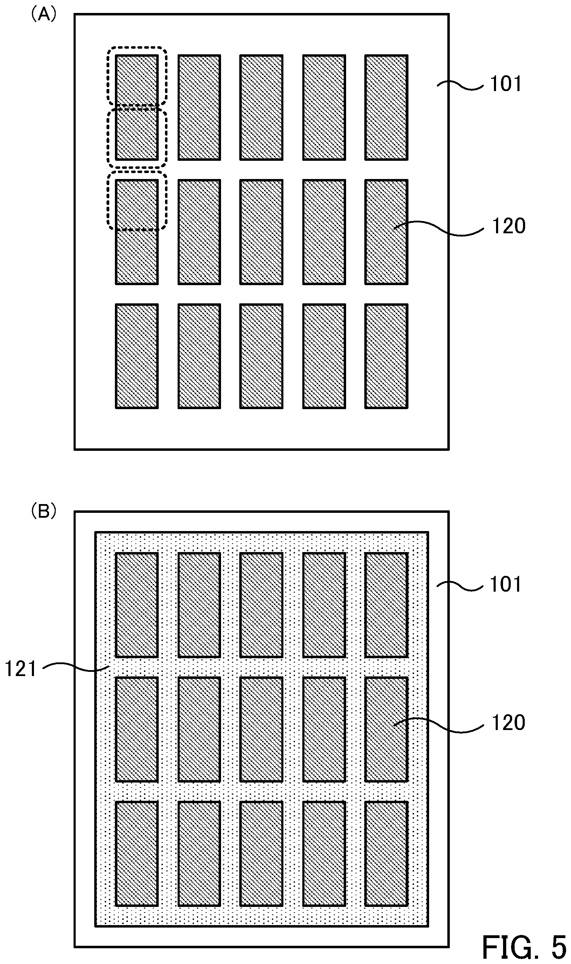

FIG. 5 includes views for describing an example of a method of forming a negative electrode part. Part (A) of FIG. 5 is a schematic plan view illustrating a main part of an example of a negative electrode layer forming step. Part (B) of FIG. 5 is a schematic plan view illustrating a main part of an example of a buried layer forming step.

As illustrated in part (A) of FIG. 5, the negative electrode layer paste is applied on an electrolyte sheet 101 and is then dried, thereby forming negative electrode layers 120 of the first layer. The negative electrode layer paste is applied with the screen printing method, for example. The applied negative electrode layer paste is dried under the following conditions: at temperature of 90°C for five minutes, for example.

The negative electrode layers 120 (negative electrode layer paste) are respectively formed in areas for forming a plurality of solid-state batteries on the single electrolyte sheet 101. Part (A) of FIG. 5 illustrates the negative electrode layers 120 of one size, as an example, which are each used as negative electrode layers of two solid-state batteries. Part (A) of FIG. 5 illustrates areas (three areas, just for convenience) of the negative electrode layers 120 that are each used as a negative electrode layer of one solid-state battery in dotted boxes.

After the negative electrode layers 120 of the first layer are formed, the buried layer paste is applied around the negative electrode layers 120 on the electrolyte sheet 101, and is then dried, thereby forming a buried layer 121 of the first layer in the negative electrode part, as illustrated in part (B) of FIG. 5. The buried layer 121 (buried layer paste) is formed to cover the edge portions of the negative electrode layers 120 (overlie the edge portions). The buried layer paste is applied with the screen printing method, for example. The applied buried layer paste is dried under the following conditions: at temperature of 90°C for five minutes, for example.

The steps illustrated in parts (A) and (B) of FIG. 5 are repeated to form a predetermined number of layers, for example, to form as many layers as needed to obtain an active material volume and a film thickness needed to function as the negative electrode of the solid-state battery, thereby forming the negative electrode part.

A positive electrode part having a predetermined number of layers formed by repeating the above-described steps illustrated in parts (A) and (B) of FIG. 4 and a negative electrode part having a predetermined number of layers formed by repeating the above-described steps illustrated in parts (A) and (B) of FIG. 5 are laminated alternately, and are then subjected to the thermocompression bonding using a uniaxial press. For example, the thermocompression bonding is performed under the following conditions: at a pressure of 20 MPa and temperature of 45°C. By performing the thermocompression bonding, a laminate (laminate green) having a structure where the positive electrode part and the negative electrode part are laminated alternately is formed. The obtained laminate green is cut at predetermined positions using a cutting machine, and is then subjected to heat treatment for debinding under the following conditions: at temperature of 500°C for 10 hours in an atmosphere containing oxygen, and is further subjected to heat treatment for sintering under the following conditions: at temperature of 600°C for 2 hours in an atmosphere containing nitrogen. As a result, solid-state batteries are obtained.

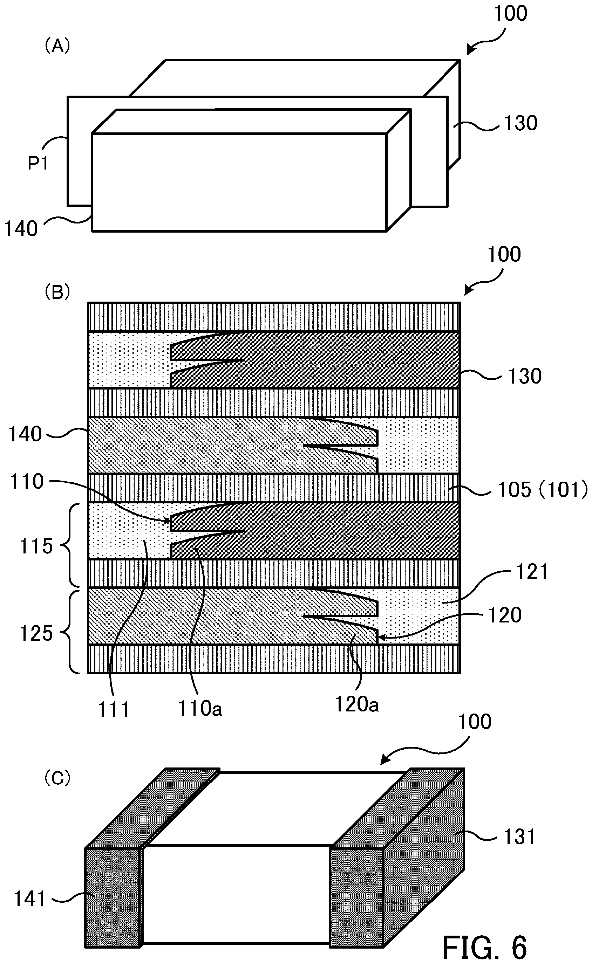

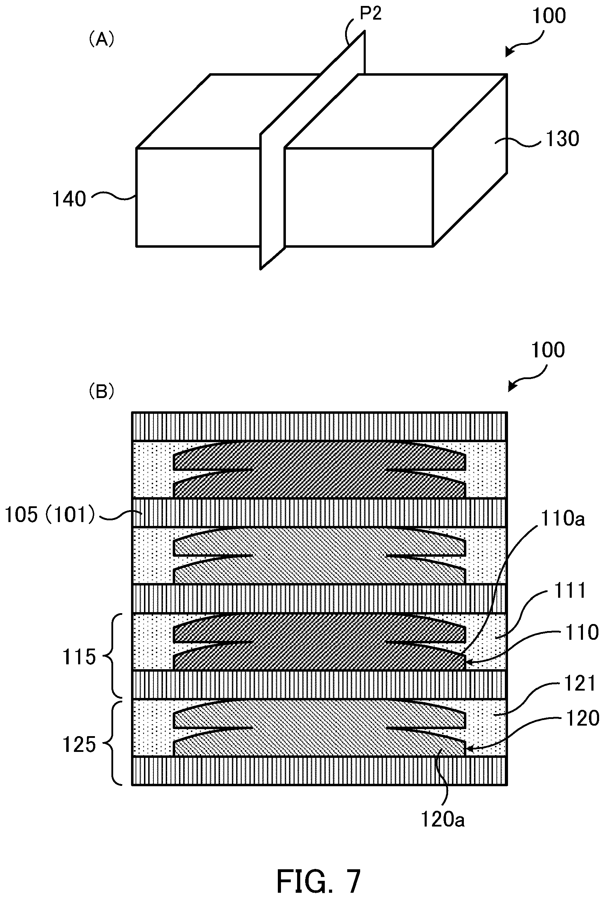

FIGS. 6 and 7 are views for describing an example of the structure of the solid-state battery. Part (A) of FIG. 6 is a schematic perspective view of the appearance of the solid-state battery. Part (B) of FIG. 6 schematically illustrates an example of a cross section cut by a plane P1 illustrated in part (A) of FIG. 6. Part (C) of FIG. 6 is a schematic perspective view of the appearance of the solid-state battery with external terminals. Part (A) of FIG. 7 is a schematic perspective view of the appearance of the solid-state battery, and part (B) of FIG. 7 schematically illustrates an example of a cross section cut by a plane P2 illustrated in part (A) of FIG. 7.

The solid-state battery 100 illustrated in part (A) of FIG. 6 and part (A) of FIG. 7 is manufactured by cutting the above-described laminate green using the cutting machine and performing the heat treatment.

The laminate green has a structure as illustrated in part (B) of FIG. 6 and part (B) of FIG. 7, in which a positive electrode part 115 and a negative electrode part 125 are laminated alternately and are bonded by the thermocompression bonding. Each positive electrode part 115 has an electrolyte sheet 101 (electrolyte layer 105), and positive electrode layers 110 and buried layers 111 for a predetermined number of layers (as an example, two layers) provided on the electrolyte sheet 101. Each negative electrode part 125 has an electrolyte sheet 101 (electrolyte layer 105), and negative electrode layers 120 and buried layers 121 for a predetermined number of layers (as an example, two layers) provided on the electrolyte sheet 101.

Such a laminate green is cut as illustrated in part (B) of FIG. 6 and part (B) of FIG. 7 such that the positive electrode layers 110 are exposed on one end face and the negative electrode layers 120 are exposed on the other end face as illustrated in part (B) of FIG. 6, and then is subjected to the heat treatment. By doing so, the solid-state battery 100 is obtained.

The positive electrode layers 110 for the plurality of layers (two layers, as an example) in each positive electrode part 115 are sintered and integrated by the heat treatment, which is performed after the cutting, for example. Similarly, the negative electrode layers 120 for the plurality of layers (two layers, as an example) in each negative electrode part 125 are sintered and integrated by the heat treatment, which is performed after the cutting, for example. Part of the buried layer 111 is interposed between the edge portions 110a of the positive electrode layers 110 in each positive electrode part 115, and part of the buried layer 121 is interposed between the edge portions 120a of the negative electrode layers 120 in each negative electrode part 125.

The one end face where the positive electrode layers 110 are exposed is used as a positive electrode terminal face 130, and the other end face where the negative electrode layers 120 are exposed is used as a negative electrode terminal face 140. On the positive electrode terminal face 130, the side end faces of the positive electrode layers 110 of the positive electrode parts 115, the side end faces of the electrolyte layers 105 obtained by cutting the electrolyte sheet 101, and the side end faces of the buried layers 121 of the negative electrode parts 125 are exposed, and the negative electrode layers 120 are not exposed. On the negative electrode terminal face 140, the side end faces of the negative electrode layers 120 of the negative electrode parts 125, the side end faces of the electrolyte layers 105, and the side end faces of the buried layers 111 of the positive electrode parts 115 are exposed, and the positive electrode layers 110 are not exposed. In the intermediate portion between the positive electrode terminal face 130 and the negative electrode terminal face 140 as illustrated in part (A) of FIG. 7, the positive electrode layers 110 of a positive electrode part 115 and the negative electrode layers 120 of a negative electrode part 125 are laminated alternately with an electrolyte layer 105 interposed therebetween, as illustrated in part (B) of FIG. 7 (and part (B) of FIG. 6).

Then, as illustrated in part (C) of FIG. 6, a positive electrode terminal 131 and a negative electrode terminal 141 are formed as external terminals respectively at the positive electrode terminal face 130 and negative electrode terminal face 140 of the solid-state battery 100 as illustrated in parts (A) and (B) of FIG. 6 (and part (A) of FIG. 7). The positive electrode terminal 131 is formed such as to be connected to the side end faces of the positive electrode layers 110 exposed on the positive electrode terminal face 130, and the negative electrode terminal 141 is formed such as to be connected to the side end faces of the negative electrode layers 120 exposed on the negative electrode terminal face 140. By doing so, the chip-type solid-state battery 100 is obtained, in which a plurality of battery cells each having a pair of positive and negative electrode layers 110 and 120 and an electrolyte layer 105 interposed therebetween are electrically connected in parallel.

The following describes an example of producing the solid-state battery 100 having the above-described structure in detail, focusing on the cross section cut by the plane P1 illustrated in part (A) of FIG. 6, i.e., the cross section taken in a direction (hereinafter, referred to as "terminal face perpendicular direction") perpendicular to the positive electrode terminal face 130 and negative electrode terminal face 140, and the cross section cut by the plane P2 illustrated in part (A) of FIG. 7, i.e., the cross section taken in a direction (hereinafter, referred to as "terminal face parallel direction") parallel to the positive electrode terminal face 130 and negative electrode terminal face 140.

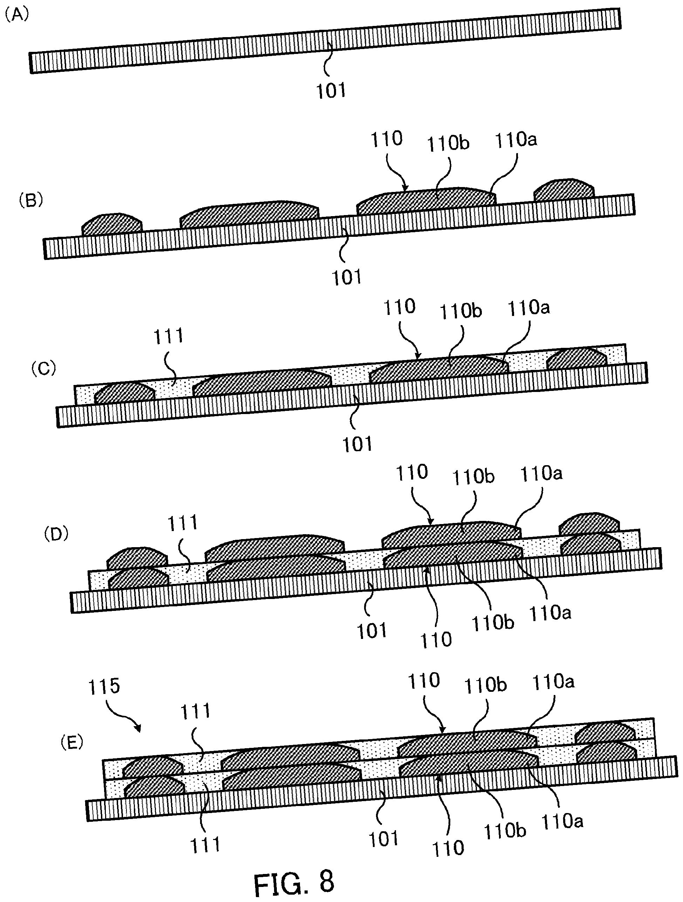

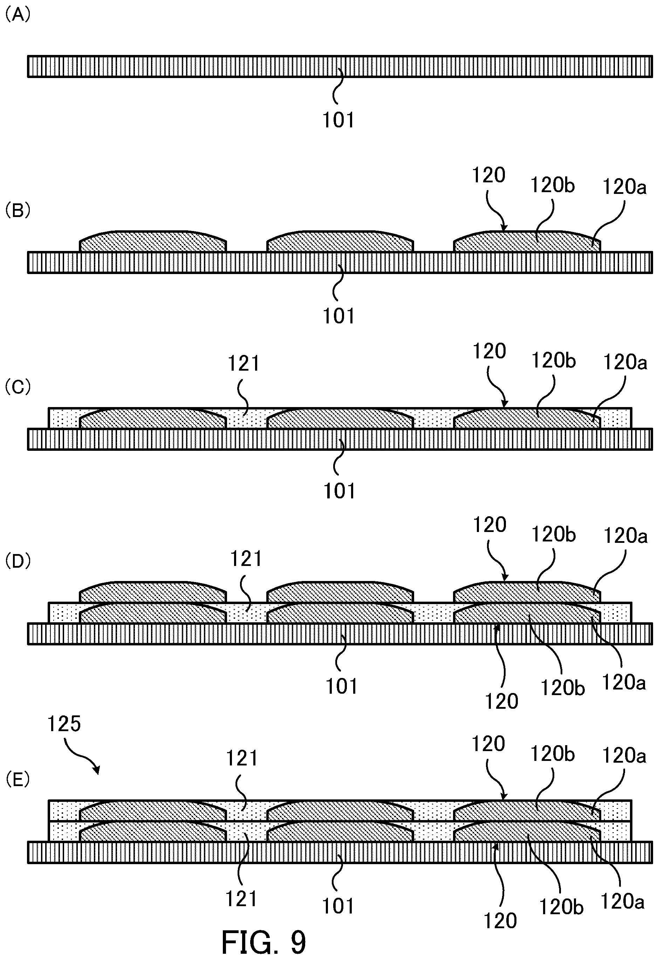

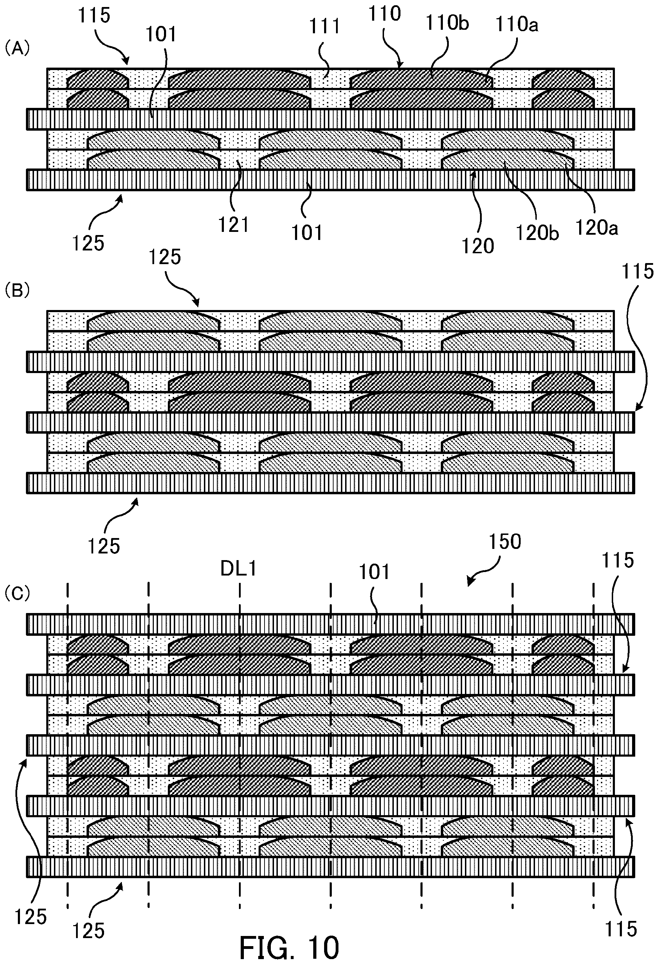

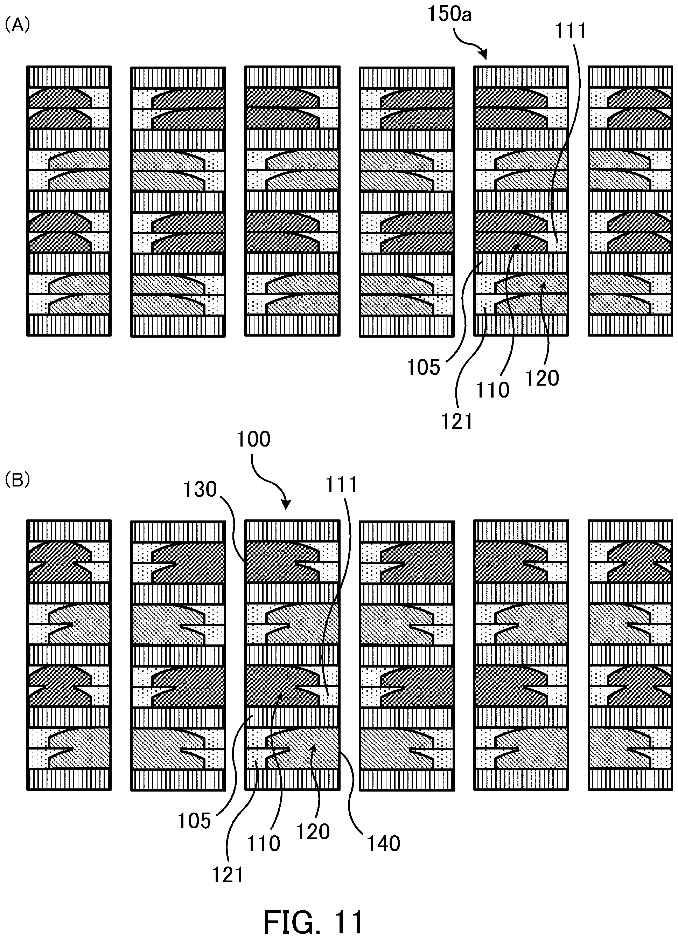

FIG. 8 includes views of cross sections in the terminal face perpendicular direction, illustrating an example of steps of forming a positive electrode part, FIG. 9 includes views of cross sections in the terminal face perpendicular direction, illustrating an example of steps of forming a negative electrode part, FIG. 10 includes views of cross sections in the terminal face perpendicular direction, illustrating an example of steps of forming a laminate green, and FIG. 11 includes views of cross sections in the terminal face perpendicular direction, illustrating an example of a cutting step and a heat treatment step. Parts (A) to (E) of FIG. 8, parts (A) to (E) of FIG. 9, parts (A) to (C) of FIG. 10, and parts (A) and (B) of FIG. 11 are each a schematic sectional view illustrating a main part of a corresponding step.

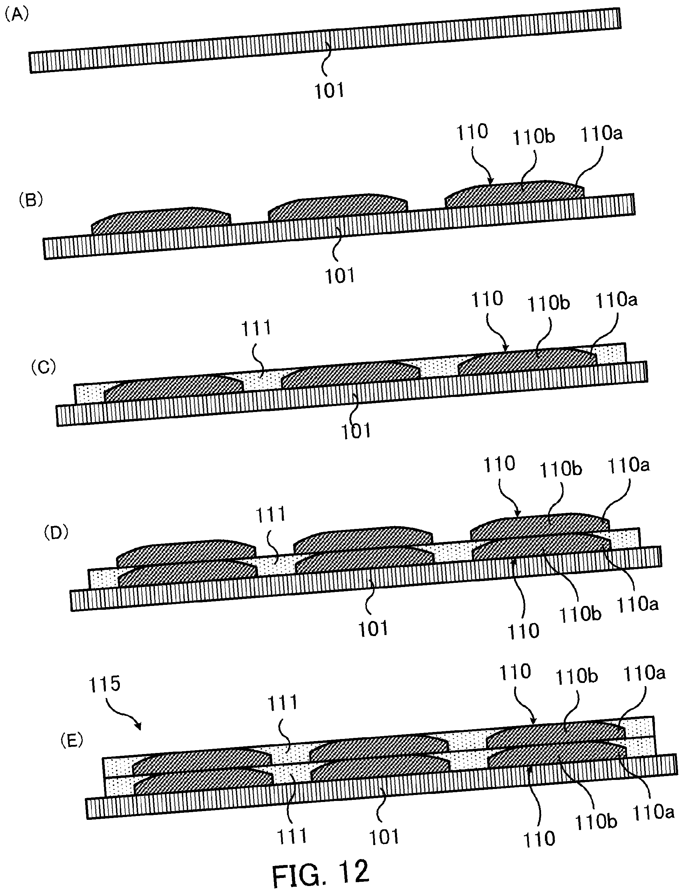

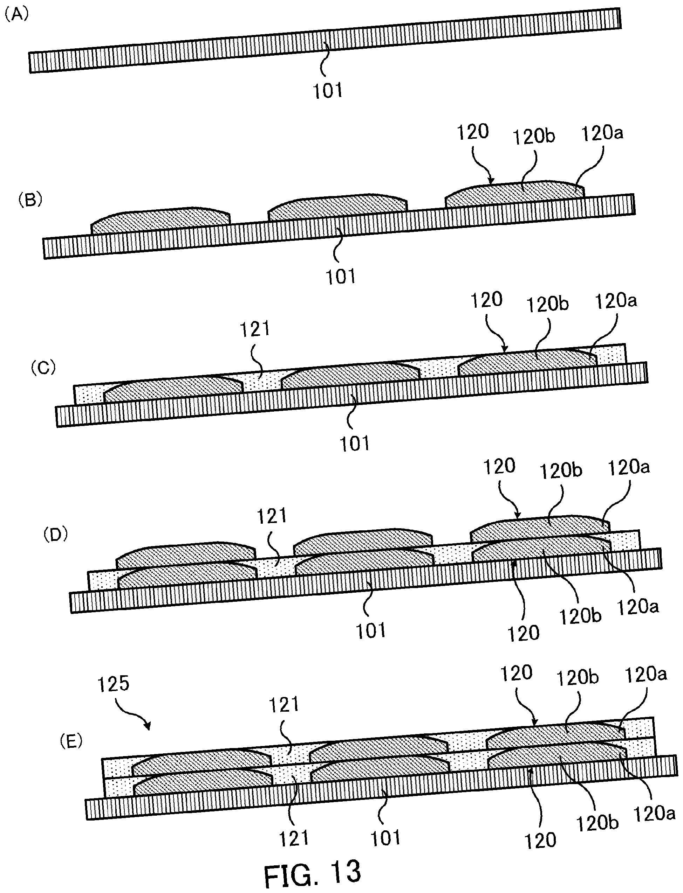

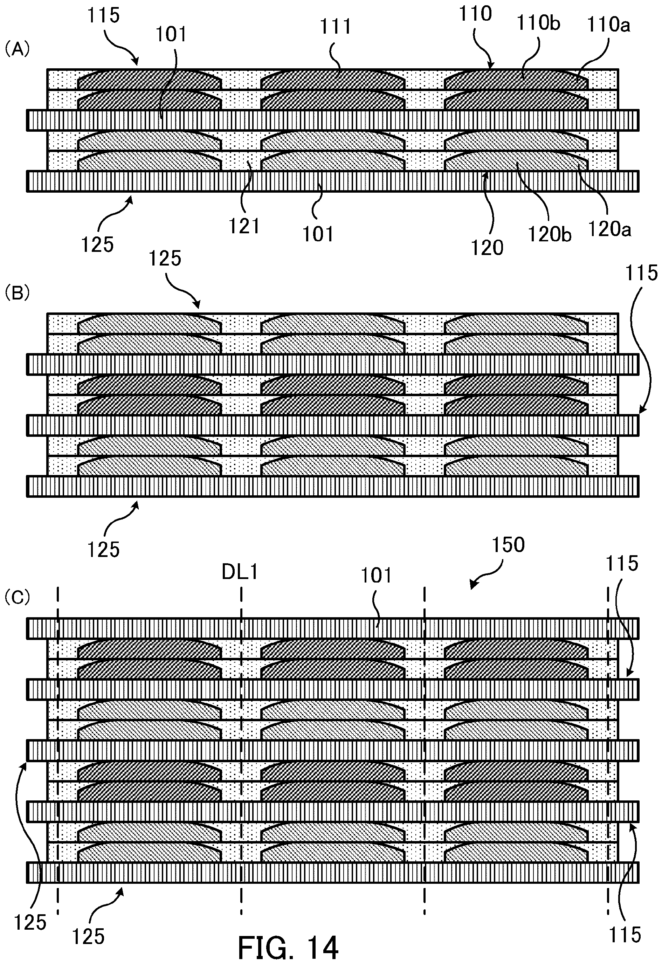

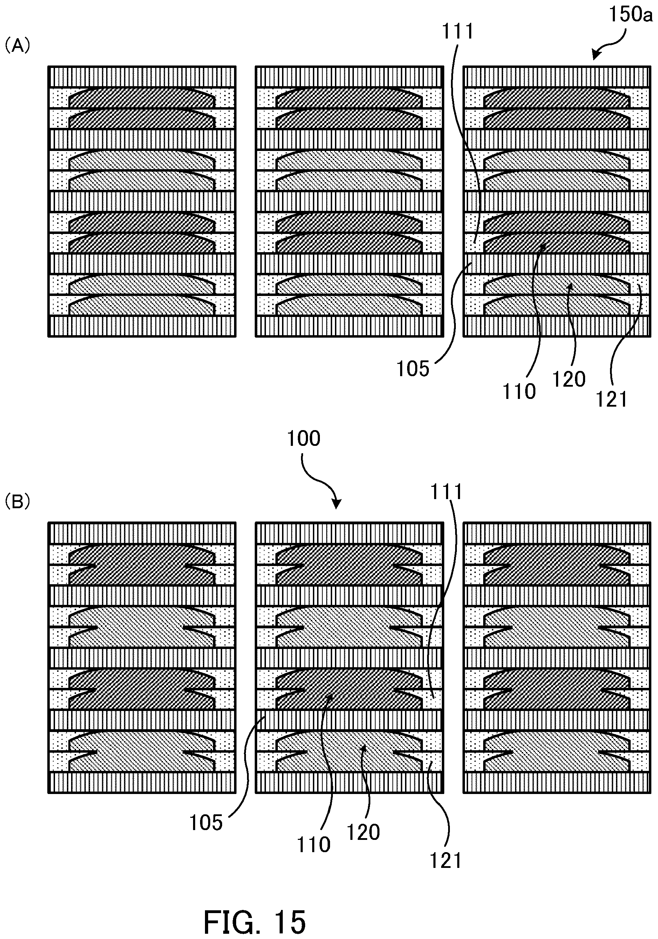

FIG. 12 includes views of cross sections in the terminal face parallel direction, illustrating the example of the steps of forming the positive electrode part, FIG. 13 includes views of cross sections in the terminal face parallel direction, illustrating the example of the steps of forming the negative electrode part, FIG. 14 includes views of cross sections in the terminal face parallel direction, illustrating the example of the steps of forming the laminate green, and FIG. 15 includes views of cross sections in the terminal face parallel direction, illustrating the example of the cutting step and heat treatment step. Parts (A) to (E) of FIG. 12, parts (A) to (E) of FIG. 13, parts (A) to (C) of FIG. 14, and parts (A) and (B) of FIG. 15 are each a schematic sectional view illustrating a main part of a corresponding step.

### (Formation of Positive Electrode Part)

In the formation of a positive electrode part 115, an electrolyte sheet 101 is first prepared, as illustrated in part (A) of FIG. 8 and part (A) of FIG. 12.

Then, as illustrated in part (B) of FIG. 8 and part (B) of FIG. 12, the positive electrode layer paste is applied to predetermined areas (areas for forming a plurality of solid-state batteries) on the electrolyte sheet 101 with the screen printing method and is dried, thereby forming positive electrode layers 110 of the first layer. In this connection, the positive electrode layers 110 of the first layer are respectively formed in the areas on the electrolyte sheet 101 with the screen printing method in such a manner that the inner portions 110b thereof are thicker than the entire peripheral edge portions 110a thereof.

Then, as illustrated in part (C) of FIG. 8 and part (C) of FIG. 12, the buried layer paste is applied around the positive electrode layers 110 of the first layer on the electrolyte sheet 101 with the screen printing method and is dried, thereby forming a buried layer 111 of the first layer. The buried layer 111 of the first layer is formed so as to cover the edge portions 110a of the positive electrode layers 110 of the first layer and expose the inner portions 110b thereof.

Then, as illustrated in part (D) of FIG. 8 and part (D) of FIG. 12, the positive electrode layer paste is applied on the positive electrode layers 110 of the first layer with the screen printing method and is dried, so that positive electrode layers 110 of the second layer are formed such as to be laminated on the positive electrode layers 110 of the first layer. As with the positive electrode layers 110 of the first layer, the positive electrode layers 110 of the second layer are formed such that the inner portions 110b thereof are thicker than the entire peripheral edge portions 110a thereof. The buried layer 111 of the first layer formed to cover the edge portions 110a of the positive electrode layers 110 of the first layer is interposed between the edge portions 110a of the positive electrode layers 110 of the first and second layers.

Then, as illustrated in part (E) of FIG. 8 and part (E) of FIG. 12, the buried layer paste is applied around the positive electrode layers 110 of the second layer with the screen printing method and is then dried, thereby forming a buried layer 111 of the second layer. The buried layer 111 of the second layer is formed so as to cover the edge portions 110a of the positive electrode layers 110 of the second layer and expose the inner portions 110b thereof.

For example, with the steps illustrated in parts (A) to (E) of FIG. 8 and parts (A) to (E) of FIG. 12, the positive electrode part 115 is formed, which has a structure where the positive electrode layers 110 for a plurality of layers (two layers in this example) are laminated, and the edge portions 110a of the positive electrode layers 110 are respectively covered with the buried layers 111.

### (Formation of Negative Electrode Part)

In the formation of a negative electrode part 125, an electrolyte sheet 101 is first prepared, as illustrated in part (A) of FIG. 9 and part (A) of FIG. 13.

Then, as illustrated in part (B) of FIG. 9 and part (B) of FIG. 13, the negative electrode layer paste is applied to predetermined areas (areas for forming a plurality of solid-state batteries) on the electrolyte sheet 101 with the screen printing method and is dried, thereby forming negative electrode layers 120 of the first layer. The negative electrode layers 120 of the first layer are respectively formed in the areas on the electrolyte sheet 101 with the screen printing method in such a manner that the inner portions 120b thereof are thicker than the entire peripheral edge portions 120a thereof.

Then, as illustrated in part (C) of FIG. 9 and part (C) of FIG. 13, the buried layer paste is applied around the negative electrode layers 120 of the first layer on the electrolyte sheet 101 with the screen printing method and is dried, thereby forming a buried layer 121 of the first layer. The buried layer 121 of the first layer is formed so as to cover the edge portions 120a of the negative electrode layers 120 of the first layer and expose the inner portions 120b thereof.

Then, as illustrated in part (D) of FIG. 9 and part (D) of FIG. 13, the negative electrode layer paste is applied on the negative electrode layers 120 of the first layer with the screen printing method and is dried, so that negative electrode layers 120 of the second layer are formed such as to be laminated onto the negative electrode layers 120 of the first layer. As with the negative electrode layers 120 of the first layer, the negative electrode layers 120 of the second layer are formed such that the inner portions 120b thereof are thicker than the entire peripheral edge portions 120a thereof. Part of the buried layer 121 of the first layer formed to cover the edge portions 120a of the negative electrode layers 120 of the first layer is interposed between the edge portions 120a of the negative electrode layers 120 of the first and second layers.

Then, as illustrated in part (E) of FIG. 9 and part (E) of FIG. 13, the buried layer paste is applied around the negative electrode layers 120 of the second layer with the screen printing method and is then dried, thereby forming a buried layer 121 of the second layer. The buried layer 121 of the second layer is formed so as to cover the edge portions 120a of the negative electrode layers 120 of the second layer and expose the inner portions 120b thereof.

For example, with the steps illustrated in parts (A) to (E) of FIG. 9 and parts (A) to (E) of FIG. 13, the negative electrode part 125 is formed, which has a structure where the negative electrode layers 120 for a plurality of layers (two layers in this example) are laminated, and the edge portions 120a of the negative electrode layers 120 are respectively covered with the buried layers 121.

### (Formation of Laminate Green)

A positive electrode part 115 and a negative electrode part 125 obtained in the above-described manner are laminated alternately and are subjected to the thermocompression bonding, thereby forming a laminate green. For example, as illustrated in part (A) of FIG. 10 and part (A) of FIG. 14, the positive electrode part 115 of a fist layer is laminated on the negative electrode part 125 of the first layer, and then as illustrated in part (B) of FIG. 10 and part (B) of FIG. 14, the negative electrode part 125 of a second layer is laminated on the positive electrode part 115 of the first layer. Similarly, as illustrated in part (C) of FIG. 10 and part (C) of FIG. 14, the positive electrode part 115 of the second layer is laminated on the negative electrode part 125 of the second layer, and an electrolyte sheet 101 is further laminated thereon as the top layer. These are subjected to the thermocompression bonding, thereby forming the laminate green 150.

In forming the laminate green 150 as described above, the negative electrode parts 125 and the positive electrode parts 115 are laminated such that negative electrode layers 120 and positive electrode layers 110 that face each other partly overlap in the cross section in the terminal face perpendicular direction (the cross section cut by the plane P1 illustrated in part (A) of FIG. 6), as illustrated in parts (A) to (C) of FIG. 10. More specifically, the negative electrode parts 125 and the positive electrode parts 115 are laminated such that an upper-side positive electrode layer 110 strides over adjacent lower-side negative electrode layers 120, and an upper-side negative electrode layer 120 strides over adjacent lower-side positive electrode layers 110 in sectional view in the terminal face perpendicular direction. Alternatively, in the steps of forming the negative electrode parts 125 and the positive electrode parts 115, the screen printing is performed such that the negative electrode layers 120 and the positive electrode layers 110 have such a positional relationship that, when these parts are laminated, partial overlaps between the negative electrode layers 120 and the positive electrode layers 110 are seen in the cross section in the terminal face perpendicular direction.

On the other hand, the negative electrode parts 125 and the positive electrode parts 115 are laminated such that their negative electrode layers 120 and their positive electrode layers 110 entirely overlap in the cross section in the terminal face parallel direction (the cross section cut by the plane P2 illustrated in part (A) of FIG. 7), as illustrated in parts (A) to (C) of FIG. 14. Alternatively, in the steps of forming the negative electrode parts 125 and the positive electrode parts 115, the screen printing is performed such that the negative electrode layers 120 and the positive electrode layers 110 have such a positional relationship that, when these parts are laminated, an entire overlap between the negative electrode layers 120 and the positive electrode layers 110 is seen in the cross section in the terminal face parallel direction.

### (Cutting and Heat Treatment)

The laminate green 150 obtained as described above is cut at the positions DL1 indicated by the dashed lines of part (C) of FIG. 10 and part (C) of FIG. 14 using the cutting machine. By doing so, a plurality of pieces 150a are obtained from the laminate green 150 as illustrated in part (A) of FIG. 11 and part (A) of FIG. 15. Then, these pieces are subjected to the heat treatment for debinding and firing, so that separate solid-state batteries 100 are formed as illustrated in part (B) of FIG. 11 and part (B) of FIG. 15 (and part (B) of FIG. 6 and part (B) of FIG. 7). The individual solid-state battery 100 includes a plurality of battery cells each having a cut electrolyte sheet 101 as an electrolyte layer 105 and positive electrode layers 110 and negative electrode layers 120 with the electrolyte layer 105 interposed therebetween. In the heat treatment to form the solid-state batteries 100, the negative electrode layers 120 laminated in each negative electrode part 125 are integrated by sintering, and the positive electrode layers 110 laminated in each positive electrode part 115 are integrated by sintering.

As illustrated in part (B) of FIG. 11, on one end face of each solid-state battery 100 in the terminal face perpendicular direction, the side end faces of the positive electrode layers 110 are exposed, and on the other end face of each solid-state battery 100 in the terminal face perpendicular direction, the side end faces of the negative electrode layers 120 are exposed. That is, in the terminal face perpendicular direction, the side of each solid-state battery 100 where the side end faces of the positive electrode layers 110 are exposed becomes the positive electrode terminal face 130, and the side of each solid-state battery 100 where the side end faces of the negative electrode layers 120 are exposed becomes the negative electrode terminal face 140. Then, the positive electrode terminal 131 and negative electrode terminal 141 illustrated in part (C) of FIG. 6 are formed respectively at these positive electrode terminal face 130 and negative electrode terminal face 140. In the manner described above, the chip-type solid-state batteries 100 are obtained.

In the solid-state battery 100 obtained by the above-described steps, at a time when a plurality of positive electrode layers 110 are laminated to obtain a positive electrode part 115, a positive electrode layer 110 is laminated on another positive electrode layer 110 after the edge portion 110a of the other positive electrode layer 110 thinner than the inner portion 110b thereof is covered with a buried layer 111. Similarly, at a time when a plurality of negative electrode layers 120 are laminated to obtain a negative electrode part 125, one negative electrode layer 120 is laminated on another negative electrode layer 120 after the edge portion 120a of the other negative electrode layer 120 thinner than the inner portion 120b thereof is covered with a buried layer 121.

Therefore, at a time when the positive electrode parts 115 and negative electrode parts 125 are laminated and are subjected to the thermocompression bonding to obtain the laminate green 150, deformation of the positive electrode layers 110 is prevented in the thermocompression bonding, compared with the case where the buried layers 111 are not provided on the edge portions 110a of the positive electrode layers 110. Similarly, deformation of the negative electrode layers 120 is prevented in the thermocompression bonding, compared with the case where the buried layers 121 are not provided on the edge portions 120a of the negative electrode layers 120. In addition, deformation of the positive electrode layers 110 and negative electrode layers 120 are also prevented in the subsequent heat treatment. Furthermore, deformation of the electrolyte layers 105 interposed therebetween is prevented as well. Since the deformation of the positive electrode layers 110, negative electrode layers 120, and others is prevented, the occurrence of a short circuit due to the deformation is effectively prevented in the solid-state battery 100.

### (Examination of Solid-State Battery)

With regard to the solid-state battery having the above-described structure, the following describes the results of examining the coverage distance and coverage ratio of a buried layer that covers the edge portion of an electrode layer (positive electrode layer or negative electrode layer), deformation of the edge portion of the electrode layer, a defect rate of the solid-state battery, and the thicknesses of the edge portion and inner portion of the electrode layer.

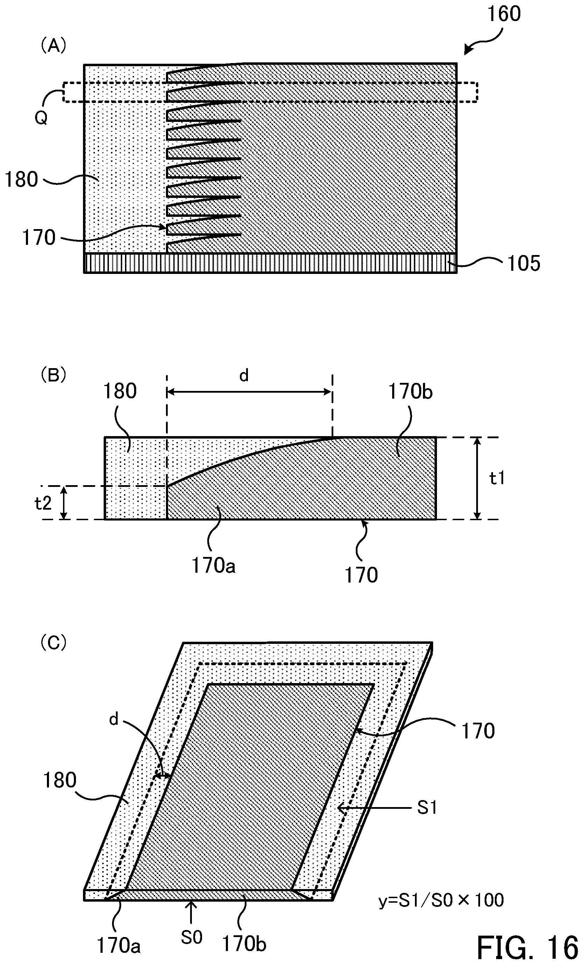

FIG. 16 includes views for describing an electrode structure of a solid-state battery. Part (A) of FIG. 16 is a schematic sectional view illustrating a main part of the solid-state battery, part (B) of FIG. 16 is a schematic enlarged view of a Q portion (corresponding to one electrode layer) illustrated in part (A) of FIG. 16, and part (C) of FIG. 16 is a schematic perspective view of the Q portion illustrated in part (A) of FIG. 16.

The solid-state battery 160 having the structure illustrated in part (A) of FIG. 16 is used for the examination. The solid-state battery 160 is obtained by laminating electrode layers 170 (corresponding to the above-described positive electrode layers 110 or negative electrode layers 120) for ten layers on an electrolyte layer 105 while the edge portion 170a of each electrode layer 170 is covered with a buried layer 180 (corresponding to the above-described buried layer 111 or buried layer 121), and performing the thermocompression bonding and then heat treatment for debinding and firing. For convenience, part (A) of FIG. 16 illustrates only one electrolyte layer 105, and the electrode layers 170 and buried layers 180 for ten layers provided on one surface of the electrolyte layer 105. Parts (B) and (C) of FIG. 16 illustrate an area (Q portion) including the electrode layer 170 of one layer, extracted from the above solid-state battery 160.

Here, the distance of the buried layer 180 covering the edge portion 170a of the electrode layer 170, measured from the side edge of the electrode layer 170 as illustrated in part (B) of FIG. 16, is taken as a "coverage distance d." A ratio of the area S1 of the area covered by the buried layer 180 with the coverage distance d to the area S0 of the principal surface of the electrode layer 170 (an integration of the ten layers by sintering) is taken as a "coverage ratio y (y = S1/S0 × 100)." In addition, the thickness of the inner portion 170b of the electrode layer 170 is taken as an "electrode thickness t1," and the thickness of the side edge of the electrode layer 170 is taken as an "edge thickness t2."

Five types of solid-state batteries 160 having structures A to E with different coverage distances d are produced and examined. In this connection, in these five types of solid-state batteries 160, the structures A, B, C, D, and E are arranged in increasing order of coverage distance d.

### (Coverage Distance of Buried Layer on Edge Portion of Electrode Layer and Deformation of Edge Portion of Electrode Layer)

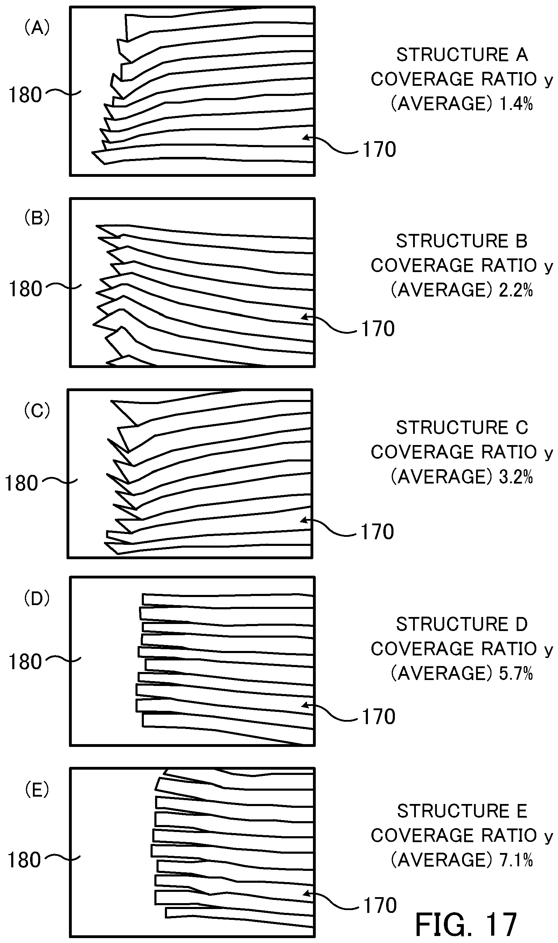

With regard to each solid-state battery 160 with the structures A to E, the coverage distance d [µm] and coverage ratio y [%] of the buried layer 180 on the edge portion 170a of the electrode layer 170, the presence or absence of deformation (electrode deformation) of the edge portion 170a of the electrode layer 170 were measured. Table 1, table 2, and FIG. 17 present the results.

**[TABLE 1]**

| STRUCTURE | A | | B | | C | |
|---|---|---|---|---|---|---|
| ELECTRODE DEFORMATION | DEFORMED | | DEFORMED | | DEFORMED | |
| MEASUREMENT No. | COVERAGE DISTANCE d [µm] | COVERAGE RATIO y [%] | COVERAGE DISTANCE d [µm] | COVERAGE RATIO y [%] | COVERAGE DISTANCE d [µm] | COVERAGE RATIO y [%] |
| 1 | 12.1 | 1.1 | 30.0 | 2.8 | 37.8 | 3.5 |
| 2 | 16.0 | 1.5 | 24.8 | 2.3 | 31.6 | 2.9 |
| 3 | 12.8 | 1.2 | 22.3 | 2.1 | 36.9 | 3.4 |
| 4 | 17.1 | 1.6 | 24.1 | 2.2 | 33.8 | 3.1 |
| 5 | 17.6 | 1.6 | 25.7 | 2.4 | 37.8 | 3.5 |
| 6 | 13.5 | 1.3 | 24.0 | 2.2 | 31.3 | 2.9 |
| 7 | 16.5 | 1.5 | 25.0 | 2.3 | 36.2 | 3.4 |
| 8 | 18.8 | 1.7 | 22.3 | 2.1 | 31.0 | 2.9 |
| 9 | 14.8 | 1.4 | 20.6 | 1.9 | 30.6 | 2.8 |
| 10 | 16.5 | 1.5 | 22.0 | 2.0 | 34.5 | 3.2 |
| AVERAGE | 15.6 | 1.4 | 24.1 | 2.2 | 34.2 | 3.2 |

**[TABLE 2]**

| STRUCTURE | D | | E | |
|---|---|---|---|---|
| ELECTRODE DEFORMATION | NOT DEFORMED | | NOT DEFORMED | |
| MEASUREMENT No. | COVERAGE DISTANCE d [µm] | COVERAGE RATIO y [%] | COVERAGE DISTANCE d [µm] | COVERAGE RATIO y [%] |
| 1 | 63.8 | 5.9 | 70.2 | 6.5 |
| 2 | 66.0 | 6.1 | 72.5 | 6.7 |
| 3 | 68.1 | 6.3 | 79.3 | 7.3 |
| 4 | 66.4 | 6.1 | 79.1 | 7.3 |
| 5 | 63.8 | 5.9 | 82.5 | 7.6 |
| 6 | 53.5 | 4.9 | 85.2 | 7.8 |
| 7 | 60.0 | 5.5 | 71.7 | 6.6 |
| 8 | 65.2 | 6.0 | 77.2 | 7.1 |
| 9 | 56.2 | 5.2 | 75.2 | 6.9 |
| 10 | 56.3 | 5.2 | 80.7 | 7.4 |
| AVERAGE | 61.9 | 5.7 | 77.4 | 7.1 |

The structure A had a coverage distance d of 15.6 µm on average and a coverage ratio y of 1.4% on average (table 1). The structure B had a coverage distance d of 24.1 µm on average and a coverage ratio y of 2.2% on average (table 1). The structure C had a coverage distance d of 34.2 µm on average and a coverage ratio y of 3.2% on average (table 1). The structure D had a coverage distance d of 61.9 µm on average and a coverage ratio y of 5.7% on average (table 2). The structure E had a coverage distance d of 77.4 µm on average and a coverage ratio y of 7.1% on average (table 2).

Here, an example of observation results of the cross sections of the solid-state batteries 160 with the structures A to E is illustrated in FIG. 17. Parts (A) to (E) of FIG. 17 simulate the cross section photos obtained from the solid-state batteries 160 with the structures A to E. As seen in parts (A) to (C) of FIG. 17, with respect to the structures A, B, and C where the coverage ratio y (on average) of the buried layer 180 on the edge portion 170a of the electrode layer 170 was relatively low, a large electrode deformation at the edge portion 170a of the electrode layer 170 was confirmed. On the other hand, as seen in parts (D) and (E) of FIG. 17, with respect to the structures D and E where the coverage ratio y (on average) of the buried layer 180 on the edge portion 170a of the electrode layer 170 was relatively high, a large electrode deformation at the edge portion 170a of the electrode layer 170 was not confirmed.

Tables 1 and 2 (and tables 3 to 6 below) indicate "deformed" with respect to the solid-state batteries 160 with the structures A, B, and C where a large electrode deformation was confirmed, and "not deformed" with respect to the solid-state batteries 160 with the structures D and E where a large electrode deformation was not confirmed.

The structures D and E where a large electrode deformation was not confirmed had the minimum coverage ratio y of 4.9% (measurement No. 6 with structure D) and the maximum coverage ratio y of 7.8% (measurement No. 6 with structure E). It is thus recognized that electrode deformation is prevented in solid-state batteries 160 where the buried layer 180 covers the edge portion 170a of the electrode layer 170 with the coverage ratio y satisfying 4.9% ≤ y ≤ 7.8%. In addition, in the case of specifying the coverage distance d as one of conditions for manufacturing, for example, the coverage distance d may be defined such that the coverage ratio y satisfies 4.9% ≤ y ≤ 6.3%, which is a range between the minimum value and the maximum value of the coverage ratio y with respect to the structure D.

### (Defect Rate of Solid-State Battery)

With respect to the solid-state batteries 160 with the structures A to E, the defect rate (%) due to an internal short circuit was assessed on the basis of an initial battery voltage. In solid-state batteries 160 produced using a positive electrode active material of LCPO and a negative electrode active material of TiO₂, the initial voltage is approximately in the range of minus several mV to minus hundred mV. Here, a solid-state battery 160 that has an initial voltage of 0 V to ±0.1 mV as a result of measurement is taken as a defect due to an internal short circuit. Thirty solid-state batteries 160 were arbitrarily extracted for each structure A to E and their voltages were measured using a tester. A ratio of the number of solid-state batteries 160 with an initial voltage of 0 V to ±0.1 mV was calculated as a defect rate. Tables 3 and 4 present the results.

**[TABLE 3]**

| STRUCTURE | A | B | C |
|---|---|---|---|
| ELECTRODE DEFORMATION | DEFORMED | DEFORMED | DEFORMED |
| DEFECT RATE [%] | 93.3 | 83.3 | 70.0 |

**[TABLE 4]**

| STRUCTURE | D | E |
|---|---|---|
| ELECTRODE DEFORMATION | NOT DEFORMED | NOT DEFORMED |
| DEFECT RATE [%] | 6.7 | 6.7 |

The structures A, B, and C where a large electrode deformation was confirmed had defect rates of 93.3%, 83.3%, and 70.0%, respectively (table 3). On the other hand, the structures D and E where a large electrode deformation was not confirmed, both had a defect rate of 6.7% (table 4). It is thus recognized that the use of the coverage distances d and coverage ratios y of the structures D and E for solid-state batteries 160 makes it possible to produce solid-state batteries 160 in which electrode deformation is prevented and the defect rate is reduced.

### (Thicknesses of Edge Portion and Inner Portion of Electrode Layer)

With respect to each solid-state battery 160 with the structures A to E, the electrode thickness t1 [µm] and the edge thickness t2 [µm] of the electrode layer 170, and the thickness difference ratio x [%] of the thickness difference between the edge thickness t2 and the electrode thickness t1 to the electrode thickness t1 were assessed. In this connection, the electrode thickness t1 is the thickness of the inner portion 170b of the electrode layer 170, and the edge thickness t2 is the thickness of the side edge of the electrode layer 170 (part (B) of FIG. 16). In addition, the thickness difference ratio x is calculated by "x = |t2 - t1|/t1 × 100." Tables 5 and 6 present the results.

**[TABLE 5]**

| STRUCTURE | A | | | B | | | C | | |
|---|---|---|---|---|---|---|---|---|---|
| ELECTRODE DEFORMATION | DEFORMED | | | DEFORMED | | | DEFORMED | | |
| MEASUREMENT No. | ELECTRODE THICKNESS t1 [µm] | EDGE THICKNESS t2 [µm] | THICKNESS DIFFERENCE RATIO x^{(∗)} [%] | ELECTRODE THICKNESS t1 [µm] | EDGE THICKNESS t2 [µm] | THICKNESS DIFFERENCE RATIO x^{(∗)} [%] | ELECTRODE THICKNESS t1 [µm] | EDGE THICKNESS t2 [µm] | THICKNESS DIFFERENCE RATIO x^{(∗)} [%] |
| 1 | 17.9 | 32.2 | 79.9 | 20.2 | 15.2 | 24.8 | 19.5 | 32.6 | 67.2 |
| 2 | 18.6 | 33.3 | 79.0 | 21.2 | 14.3 | 32.5 | 18.3 | 33.1 | 80.9 |
| 3 | 16.7 | 21.7 | 29.9 | 18.3 | 15.5 | 15.3 | 20.2 | 20.0 | 1.0 |
| 4 | 19.3 | 24.5 | 26.9 | 19.1 | 15.2 | 20.4 | 17.9 | 23.6 | 31.8 |
| 5 | 18.6 | 15.7 | 15.6 | 19.5 | 19.8 | 1.5 | 19.1 | 15.0 | 21.5 |
| 6 | 18.6 | 17.2 | 7.5 | 19.5 | 16.7 | 14.4 | 18.6 | 18.3 | 1.6 |
| 7 | 17.4 | 11.7 | 32.8 | 18.3 | 20.2 | 10.4 | 21.0 | 17.6 | 16.2 |
| 8 | 20.7 | 16.0 | 22.7 | 20.7 | 19.1 | 7.7 | 19.3 | 16.0 | 17.1 |
| 9 | 19.3 | 11.7 | 39.4 | 18.3 | 30.4 | 66.1 | 20.0 | 16.0 | 20.0 |
| 10 | 20.0 | 15.2 | 24.0 | 20.7 | 29.1 | 40.6 | 19.1 | 14.0 | 26.7 |
| AVERAGE | 18.7 | 19.9 | 35.8 | 19.6 | 19.6 | 23.4 | 19.3 | 20.6 | 28.4 |

| | | | | | | | | | |
|---|---|---|---|---|---|---|---|---|---|
| (∗) x=\|t2-t1\|/t1 × 100 | | | | | | | | | |

**[TABLE 6]**

| STRUCTURE | D | | | E | | |
|---|---|---|---|---|---|---|
| ELECTRODE DEFORMATION | NOT DEFORMED | | | NOT DEFORMED | | |
| MEASUREMENT No. | ELECTRODE THICKNESS t1 [µm] | EDGE THICKNESS t2 [µm] | THICKNESS DIFFERENCE RATIO x^{(∗)} [%] | ELECTRODE THICKNESS t1 [µm] | EDGE THICKNESS t2 [µm] | THICKNESS DIFFERENCE RATIO x^{(∗)} [%] |
| 1 | 18.3 | 18.3 | 0.0 | 20.5 | 20.0 | 2.4 |
| 2 | 18.8 | 18.3 | 2.7 | 20.5 | 20.7 | 1.0 |
| 3 | 18.8 | 18.1 | 3.7 | 19.5 | 20.7 | 6.2 |
| 4 | 18.1 | 16.4 | 9.4 | 19.0 | 18.8 | 1.1 |
| 5 | 17.1 | 16.7 | 2.3 | 20.7 | 19.8 | 4.3 |
| 6 | 18.1 | 16.7 | 7.7 | 20.5 | 20.0 | 2.4 |
| 7 | 17.9 | 16.4 | 8.4 | 20.2 | 20.5 | 1.5 |
| 8 | 18.1 | 16.4 | 9.4 | 18.1 | 18.8 | 3.9 |
| 9 | 16.4 | 16.4 | 0.0 | 20.0 | 20.2 | 1.0 |
| 10 | 18.6 | 18.3 | 1.6 | 16.0 | 15.7 | 1.9 |
| AVERAGE | 18 | 17.2 | 4.5 | 19.5 | 19.5 | 2.6 |

| | | | | | | |
|---|---|---|---|---|---|---|
| (∗) x=\|t2-t1\|/t1 × 100 | | | | | | |

With respect to the structures A, B, and C where a large electrode deformation was confirmed, the structure A had a minimum thickness difference ratio x of 7.5% and a maximum thickness difference ratio x of 79.9%, the structure B had a minimum thickness difference ratio x of 1.5% and a maximum thickness difference ratio x of 66.1%, and the structure C had a minimum thickness difference ratio x of 1.0% and a maximum thickness difference ratio x of 80.9% (table 5). On the other hand, with respect to the structures D and E where a large electrode deformation was not confirmed, the structure D had a minimum thickness difference ratio x of 0.0% and a maximum thickness difference ratio x of 9.4%, and the structure E had a minimum thickness difference ratio x of 1.0% and a maximum thickness difference ratio x of 6.2% (table 6).

It is thus recognized from the results of the structures D and E, the use of the electrode layer 170 with a thickness difference ratio x of the electrode thickness t1 and edge thickness t2 satisfying 0% ≤ x ≤ 9.4% and the use of the coverage distances d and coverage ratios y of the structures D and E for solid-state batteries 160 make it possible to produce the solid-state batteries 160 in which electrode deformation is prevented and the defect rate is reduced.

The above description is merely indicative of the principles of the present embodiments. A wide variety of modifications and changes may also be made by those skilled in the art. The present embodiments are not limited to the precise configurations and example applications indicated and described above, and all appropriate modifications and equivalents are regarded as falling within the scope of the embodiments as defined by the appended patent claims and their equivalents.

### Reference Signs List

1, 1a, 1b Electrode
3 Contact portion
4 Recess
10, 20, 170 Electrode layer
10a, 20a, 110a, 120a, 170a Edge portion
10b, 20, 110b, 120b, 170b Inner portion
11, 21, 31, 111, 121, 180 Buried layer
100, 160 Solid-state battery
101 Electrolyte sheet
105 Electrolyte layer
110 Positive electrode layer
115 Positive electrode part
120 Negative electrode layer
125 Negative electrode part
130 Positive electrode terminal face
131 Positive electrode terminal
140 Negative electrode terminal face
141 Negative electrode terminal
150 Laminate green body
150a Piece
AR1 First region
AR2 Second region
LY1 First layer
LY2 Second layer
P1, P2 Plane
DL1 Position
S0, S1 Area
t1 Electrode thickness
t2 Edge thickness
x Thickness difference ratio
d Coverage distance
y Coverage ratio

## Claims

1. A method of manufacturing a solid-state battery comprising:
a step of forming a first electrode including a first electrode layer and a second electrode layer facing the first electrode layer, the first electrode further including a first buried layer interposed between the first electrode layer and the second electrode layer so as to surround a first portion where the first electrode layer and the second electrode layer contact each other.

2. The method of manufacturing a solid-state battery according to claim 1, wherein each of the first electrode layer and the second electrode layer includes the first portion and another portion than the first portion, and is thinner at the other portion than at the first portion.

3. The method of manufacturing a solid-state battery according to claim 1, wherein a thickness of the first buried layer increases as the first buried layer is away from the first portion toward outside.

4. The method of manufacturing a solid-state battery according to claim 1, wherein each of the first electrode layer, the second electrode layer, and the first buried layer is formed by a printing method.

5. The method of manufacturing a solid-state battery according to claim 1, wherein
the first electrode layer contains a first active material,
the second electrode layer contains a second active material, and
the first buried layer has lower electron conductivity than the first active material and the second active material.

6. The method of manufacturing a solid-state battery according to claim 1, wherein a ratio of an area of the first buried layer to an area of a principal surface of the first electrode is in a range of 4.9% to 7.8%, inclusive.

7. The method of manufacturing a solid-state battery according to claim 1, further comprising:
forming a second electrode including a third electrode layer and a fourth electrode layer facing the third electrode layer, the second electrode further including a second buried layer interposed between the third electrode layer and the fourth electrode layer so as to surround a second portion where the third electrode layer and the fourth electrode layer contact each other;
forming an electrolyte layer between the first electrode and the second electrode to form a laminate of the first electrode, the electrolyte layer, and the second electrode; and
firing the laminate.

8. A solid-state battery comprising:
a first electrode having a first region and a second region surrounding the first region; and
a first buried layer disposed in the second region except for part of a side end face of the first electrode.

9. The solid-state battery according to claim 8, wherein
the second region has a recess that is recessed toward the first region, and
the first buried layer is provided in the recess of the second region.

10. The solid-state battery according to claim 8, wherein a thickness of the first buried layer increases as the first buried layer is away from the first region toward outside.

11. The solid-state battery according to claim 8, wherein
the first electrode contains one kind or two or more kinds of active materials, and
the first buried layer has lower electron conductivity than the active materials.

12. The solid-state battery according to claim 8, wherein a ratio of an area of the first buried layer to an area of a principal surface of the first electrode is in a range of 4.9% to 7.8%, inclusive.

13. The solid-state battery according to claim 8, further comprising:
a second electrode having a third region and a fourth region surrounding the third region;
a second buried layer disposed in the fourth region except for part of a side end face of the second electrode; and
an electrolyte layer disposed between the first electrode and the second electrode.
